(19) Europäisches Patentamt
European Patent Office
Office européen des brevets

(11) **EP 4 741 782 A1**

(12) **EUROPEAN PATENT APPLICATION**
published in accordance with Art. 153(4) EPC

(43) Date of publication:
**13.05.2026 Bulletin 2026/20**

(21) Application number: **24851462.2**

(22) Date of filing: **02.07.2024**

(51) International Patent Classification (IPC):
*G01J 3/10* (2006.01)    *G01J 1/08* (2006.01)
*G01J 11/00* (2006.01)    *G01N 21/01* (2006.01)
*G02B 6/30* (2006.01)    *H01S 3/00* (2006.01)
*H01S 3/04* (2006.01)    *H01S 3/10* (2006.01)

(52) Cooperative Patent Classification (CPC):
**G01J 1/08; G01J 3/10; G01J 11/00; G01N 21/01; G02B 6/30; H01S 3/00; H01S 3/04; H01S 3/10**

(86) International application number:
**PCT/JP2024/023894**

(87) International publication number:
**WO 2025/033031 (13.02.2025 Gazette 2025/07)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **10.08.2023 JP 2023131368**
**10.08.2023 JP 2023131369**

(71) Applicant: **Ushio Denki Kabushiki Kaisha
Tokyo, 1080073 (JP)**

(72) Inventor: **NAGASHIMA, Toshikazu
Tokyo 100-8150 (JP)**

(74) Representative: **Maiwald GmbH
Engineering
Elisenhof
Elisenstrasse 3
80335 München (DE)**

(54) **LIGHT SOURCE DEVICE**

(57)    A light source apparatus according to an embodiment of the present invention is a light source apparatus that generates wavelength-swept light and includes a pulse light source, a pulse stretcher, and a ventilator. The pulse light source generates pulsed light including a continuous spectrum. The pulse stretcher is configured to lengthen the pulsed light on a time axis and generate the wavelength-swept light. The ventilator supplies air to the pulse stretcher. Accordingly, it becomes possible to suppress a temperature change of the pulse stretcher, and it becomes possible to stably output the wavelength-swept light.

FIG.5

**Description**

Technical Field

The present invention relates to a light source apparatus.

Background Art

Spectroscopic analysis is widely used for component analysis or inspection of target objects. In the spectroscopic analysis, irradiation light is radiated to a target object and a spectrum of object light obtained as a result of the irradiation is measured. Then, optical properties such as reflection properties (wavelength dependency) or transmission properties can be obtained on the basis of a relationship between the spectrum of the object light and the spectrum of the irradiation light.
A wavelength-swept-type spectroscopic approach is known as one of approaches for measuring optical properties. In a wavelength-swept-type spectrometric instrument, wavelength-swept light whose wavelength changes over time is generated and radiated to an inspection target. The wavelength-swept light is pulses or pulse train with a one-to-one relationship between time and wavelength. A time waveform of light obtained by radiating the wavelength-swept light to the inspection target is detected by a photodetector. The output waveform of the photodetector represents a spectrum with the time axis corresponding to the wavelength.
Patent Literatures 1 and 2 have disclosed wavelength-swept-type spectrometers.

Citation List

Patent Literature

Patent Literature 1: Japanese Patent Application Laid-open No. 2020-159971
Patent Literature 2: Japanese Patent Application Laid-open No. 2020-159973

Disclosure of Invention

Technical Problem

It is important for the wavelength-swept-type spectrometer to stably output the wavelength-swept light.
In view of the above-mentioned circumstances, it is an objective of the present invention to provide a light source apparatus capable of stably outputting wavelength-swept light.

Solution to Problem

In order to accomplish the above-mentioned objective, a light source apparatus according to an embodiment of the present invention is a light source apparatus that generates wavelength-swept light and includes a pulse light source, a pulse stretcher, and a ventilator.
The pulse light source generates pulsed light including a continuous spectrum.
The pulse stretcher is configured to lengthen the pulsed light on a time axis and generate the wavelength-swept light.
The ventilator supplies air to the pulse stretcher.
In this light source apparatus, the ventilator supplies the air to the pulse stretcher. Accordingly, it becomes possible to suppress a temperature change of the pulse stretcher, and it becomes possible to stably output the wavelength-swept light.
The light source apparatus may further include a housing portion that includes an inlet for allowing the air to flow in and an outlet for allowing the air to flow out and houses the pulse stretcher in an inner space. In this case, the ventilator may supply the air to the inner space through the inlet.
The housing portion may house the pulse light source in the inner space.
The pulse stretcher may be arranged upstream of the pulse light source with respect to a flow path of the air flowing in from the inlet.
The inner space of the housing portion may have a multi-layer structure constituted by a plurality of layers. In this case, each of the pulse light source and the pulse stretcher may be arranged in any one of the plurality of layers. Moreover, the ventilator may supply the air to the layer where the pulse stretcher is arranged.

Each of the pulse light source and the pulse stretcher may be arranged in a different layer of the plurality of layers.

The layer where the pulse light source is arranged and the layer where the pulse stretcher is arranged may be spatially continuous in the plurality of layers. In this case, the ventilator may supply the air to the layer where the pulse stretcher is arranged or the layer where the pulse light source is arranged.

The multi-layer structure may be a structure in which the plurality of layers is stacked in a height direction of the light source apparatus.

The inlet may be configured to be a position higher than the outlet in the height direction of the light source apparatus.

The housing portion may include an uppermost surface that constitutes a top surface of an uppermost layer of the plurality of layers, the uppermost layer being located at a highest position. In this case, the inlet may be configured in the uppermost surface. Moreover, the ventilator may supply the air downwards in the height direction through the inlet.

The ventilator may be configured in the uppermost surface.

The pulse stretcher may be arranged in the uppermost layer. In this case, the pulse light source may be arranged in a layer directly below the uppermost layer. Moreover, the uppermost layer and the layer directly below the uppermost layer may be spatially continuous.

The light source apparatus may further include an air conditioner that generates control air whose temperature is controlled. In this case, the ventilator may supply the control air to the pulse stretcher.

The inner space of the housing portion may have a multi-layer structure constituted by a plurality of layers. In this case, each of the pulse light source, the pulse stretcher, and the air conditioner may be arranged in a different layer of the plurality of layers.

The multi-layer structure may be a structure in which the plurality of layers is stacked in a height direction of the light source apparatus. In this case, the air conditioner may be arranged in a layer lower than the pulse light source and the pulse stretcher in the height direction of the light source apparatus.

The air conditioner may include a temperature sensor provided in vicinity of the inlet.

The temperature sensor may be arranged at a position closer to the pulse stretcher than to the pulse light source.

The inner space of the housing portion may be configured as a thermal insulation space.

The ventilator may supply mixed air of the air flowing out from the outlet and the control air to the pulse stretcher.

The ventilator may have an airflow larger than an airflow of the air conditioner.

Air exhausted from the pulse light source may be exhausted to outside of the housing portion without passing through the layer where the pulse stretcher is arranged.

The ventilator may be a fan filter unit.

The pulse stretcher may include arrayed waveguide gratings that spatially split the pulsed light emitted from the pulse light source into a plurality of beams in accordance with wavelengths, and a plurality of fibers that corresponds to the plurality of beams and has different optical path lengths.

Note that any combination of the above-mentioned components or substitution of components or expressions among methods, apparatuses, systems, and the like is also valid as a mode of the present invention or the present disclosure. In addition, the description of this section (Solution to Problem) does not describe all essential features of the present invention. Therefore, subcombinations of these features described can also be the present invention.

Advantageous Effects of Invention

As described above, according to the present invention, it is possible to stably output wavelength-swept light. Note that the effects described herein are not necessarily limitative, and any effect described in the present disclosure may be provided.

Brief Description of Drawings

[Fig. 1]  A schematic view for describing the overview of a wavelength-swept-type spectrometer.

[Fig. 2]  A schematic view showing a specific configuration example of the spectrometer.

[Fig. 3]  A diagram showing wavelength-swept light.

[Fig. 4]  A schematic view for describing spectroscopy with the spectrometer shown in Fig. 2.

[Fig. 5]  A block diagram showing a basic configuration example of a light source apparatus according to an embodiment.

[Fig. 6]    A perspective view showing a light source apparatus illustrated as Configuration Example 1.

[Fig. 7]    A perspective view showing a light source apparatus illustrated as Configuration Example 2.

[Fig. 8]    A perspective view showing a light source apparatus illustrated as Configuration Example 3.

[Fig. 9]    A perspective view showing a light source apparatus illustrated as Configuration Example 4.

[Fig. 10]    A perspective view showing a light source apparatus illustrated as Configuration Example 5.

[Fig. 11]    A perspective view showing a light source apparatus illustrated as Configuration Example 6.

Mode(s) for Carrying Out the Invention

Hereinafter, embodiments according to the present invention will be described with reference to the drawings.

[Overview of Wavelength Sweep-Type Spectrometer]

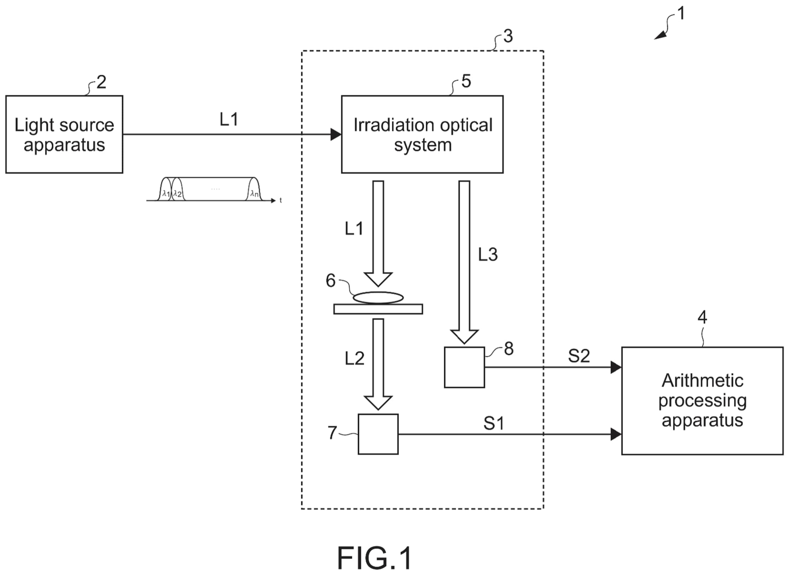

Fig. 1 is a schematic view for describing the overview of a wavelength-swept-type spectrometer. The spectrometer is also referred to as a spectrometric instrument, a spectroscopic apparatus, or a spectroscopic inspection apparatus, for example.
A spectrometer 1 shown in Fig. 1 includes a light source apparatus 2, a spectroscopic head 3, and an arithmetic processing apparatus 4.
The light source apparatus 2 generates wavelength-swept light L1. The wavelength-swept light L1 is guided to the spectroscopic head 3. An irradiation optical system 5 of the spectroscopic head 3 irradiates a sample 6 with the wavelength-swept light L1. A first photodetector 7 detects light (object light) L2 obtained as a result of irradiating the sample 6 with the wavelength-swept light L1. Object light L2 can be reflected light or transmitted light of the sample 6.
In the irradiation optical system 5, part of the wavelength-swept light L1 is branched as reference light L3. A second photodetector 8 measures the reference light L3.
A first detection signal S1 generated by the first photodetector 7 and a second detection signal S2 generated by the second photodetector 8 are supplied to the arithmetic processing apparatus 4.
The object light L2 and the reference light L3 inherit a one-to-one correspondence relationship between the time and wavelength of the wavelength-swept light L1. Thus, a time waveform of the first detection signal S1 can be converted to a spectrum of the object light L2 by converting the time axis to the wavelength.
Similarly, a time waveform of the second detection signal S2 can be converted to a spectrum of the reference light L3 by converting the time axis to the wavelength. The arithmetic processing apparatus 4 calculates, for example, a percentage of the object light L2 with respect to the reference light L3, for each corresponding wavelength, and measures spectral properties (e.g., reflectance and transmittance) of the sample 6.

[Specific Configuration Example of Spectrometer]

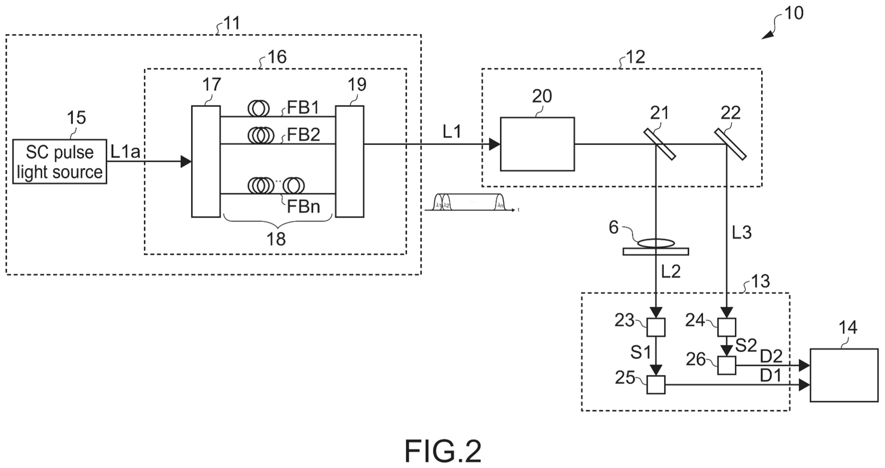

Fig. 2 is a schematic view showing a specific configuration example of the spectrometer. The spectrometer 10 shown in Fig. 2 includes a light source apparatus 11, an irradiation optical system 12, a light-receiving apparatus 13, and an arithmetic processing apparatus 14.
The light source apparatus 11 generates the wavelength-swept light L1 whose wavelength changes over time. The time and wavelength of the wavelength-swept light L1 correspond one-to-one to each other. This can be expressed as the wavelength-swept light L1 "having wavelength uniqueness."
The light source apparatus 11 is provided with a pulse light source 15 and a pulse stretcher 16.
The pulse light source 15 emits broadband pulsed light L1a with a broadband continuous spectrum. A spectrum of the broadband pulsed light L1a is continuous, for example, in a range of 900 nm to 1300 nm, in a wavelength range of at least 10 nm, favorably 50 nm, more favorably 100 nm. The wavelength range of the broadband pulsed light L1a only needs to cover a wavelength range necessary for the spectroscopy.
For example, the pulse light source 15 can include an ultrashort pulse laser and a nonlinear element. Examples of the ultrashort pulse laser include a gain switch laser, a micro-chip laser, and a fiber laser.
The nonlinear element further broadens the spectral width of ultrashort pulses generated by an ultrashort pulse laser due to a nonlinear phenomenon. A fiber is favorable as the nonlinear element. For example, a photonic crystal fiber or another nonlinear fiber can be used as the nonlinear element. Although a single-mode fiber is favorable, a multi-mode fiber can also be used as long as it exhibits sufficient nonlinearity.

The broadband pulsed light L1a output from the nonlinear element has a pulse width of the order of a femtosecond to a nanosecond. Note that another broadband pulse light source, such as a superluminescent diode (SLD) light source, may be used as the pulse light source 15.

The pulse stretcher 16 lengthens the pulse width of the broadband pulsed light L1a and outputs the wavelength-swept light L1. The pulse stretcher 16 is provided with a splitter 17, a delay line 18, and a coupler 19.

The splitter 17 splits the broadband pulsed light L1a into a plurality (n) beams (where $n \geq 2$) in accordance with wavelengths. Although the configuration of the splitter 17 is not particularly limited, for example, it can be configured as arrayed waveguide gratings (AWG). A wavelength selective filter that selects a wavelength range of spectral components included in the broadband pulsed light L1a, which is to be used for the spectroscopy, may be provided between the splitter 17 and the pulse light source 15.

The delay line 18 provides different delays to light (split light) in a plurality of paths. For example, the delay line 18 includes a plurality of fibers FB1 to FBn with different optical path lengths.

It is assumed that the broadband pulsed light L1a before it is split is positive chirp pulses (up chirp pulses) whose frequency increases over time (whose wavelength decreases). In this case, a component of a longest wavelength $\lambda 1$ is included in the leading edge of the pulse and a component of a shortest wavelength $\lambda n$ is included in the trailing edge of the pulse.

The plurality of fibers FB1 to FBn has different optical path lengths l1 to ln. Assuming that $\lambda 1$ denotes the longest wavelength and $\lambda n$ denotes the shortest wavelength, it is sufficient to meet the relationship of l1 < l2 < ... < ln in order to make the wavelength-swept light L1 the same positive chirp pulses as the broadband pulsed light L1a. As an example, in a case where n = 20, optical path lengths l1 to l20 of 20 fibers FB may increase in increments of 1 m from 1 m to 20 m.

The fibers FB1 to FBn do not need to have group delay properties different for each wavelength, and the same fibers (fibers of the same core/cladding material) can be used. In this regard, multi-mode fibers can be used as the fibers FB. In this case, it is advantageous in that it can prevent unwanted nonlinear optical effects.

The coupler 19 couples the plurality of beams to which the different delays have been applied by the delay line 18. For example, the coupler 19 may be AWG that combine the n beams. Alternatively, bundle fibers or multi-core fibers may be used for the delay line 18. The spatially coupled light is emitted as the wavelength-swept light L1.

In this embodiment, the splitter 17 is configured as an embodiment of the arrayed waveguide gratings that spatially split the pulsed light emitted from the pulse light source into a plurality of beams in accordance with wavelengths, according to the present invention. Moreover, the plurality of fibers FB1 to FBn is configured as an embodiment of a plurality of fibers with different optical path lengths, which corresponds to the plurality of beams, according to the present invention.

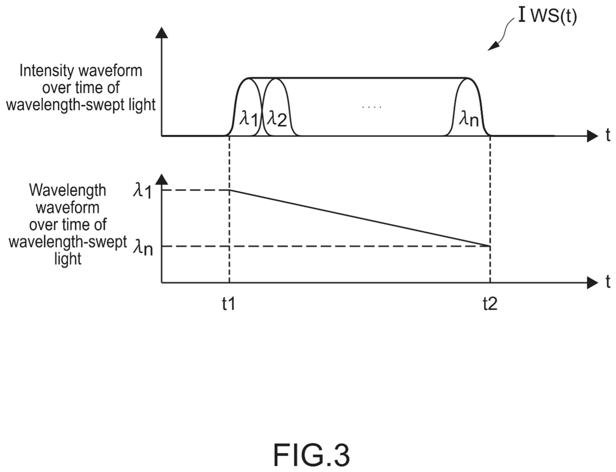

Fig. 3 is a diagram showing the wavelength-swept light L1. The upper section of Fig. 3 shows intensity (time waveform) IWS(t) of the wavelength-swept light L1 and the lower section shows a change over time of a wavelength $\lambda$ of the wavelength-swept light L1.

In this example, the wavelength-swept light L1 is a single pulsed light beam. Regarding the wavelength-swept light L1, the main wavelength is $\lambda 1$ at its leading edge, the main wavelength is $\lambda n$ at its trailing edge, and the wavelength changes over time between $\lambda 1$ to $\lambda n$ within one pulse. In this example, the wavelength-swept light L1 is positive chirp pulses ($\lambda 1 > \lambda n$) whose number of vibrations increases over time, in other words, whose wavelength decreases over time.

Note that the wavelength-swept light L1 may be negative chirp pulses whose wavelength increases over time ($\lambda 1 < \lambda n$). The wavelength-swept light L1 may be a pulse train including a temporally isolated pulse (wave packet) of each wavelength.

Referring back to Fig. 2, the irradiation optical system 12 irradiates the sample 6 with the wavelength-swept light L1. The optical fiber may be coupled between the irradiation optical system 12 and the light source apparatus 11.

The irradiation optical system 12 is provided with a lens optical system 20, a beam splitter 21, and a mirror 22. The lens optical system 20 collects the wavelength-swept light L1 with a suitable beam size on the surface of the sample 6 (sample surface).

The beam splitter 21 directs part of the wavelength-swept light L1 toward the sample 6. Moreover, the beam splitter 21 takes part of the wavelength-swept light L1 as the reference light L3. The mirror 22 directs the reference light L3 toward the light-receiving apparatus 13.

The light-receiving apparatus 13 includes a first photodetector 23, a second photodetector 24, and A/D converters 25 and 26. The first photodetector 23 detects the object light L2 obtained by irradiating the sample 6 with the wavelength-swept light L1. The object light L2 may be reflected light or may be transmitted light.

The A/D converter 25 converts an output signal S1 of the first photodetector 23 to a digital signal D1. The second photodetector 24 detects the reference light L3. The A/D converter 26 converts an output signal S2 of the second photodetector 24 to a digital signal D2. A time waveform IOBJ(t) of the object light L2 indicated by the digital signal D1 and a time waveform IREF(t) of the reference light L3 indicated by the digital signal D2 are taken into the arithmetic processing apparatus 14.

In the wavelength-swept-type spectroscopic approach, the point in time and the wavelength of the wavelength-swept light L1 are in a one-to-one correspondence relationship. The reference light L3 also has this correspondence relationship as a matter of course, and the object light L2 inherits it.

Using this correspondence relationship between the time and wavelength, the arithmetic processing apparatus 14 converts the time waveform IOBJ(t) of the object light L2 to a spectrum IOBJ($\lambda$) in a frequency domain. Moreover, the arithmetic processing apparatus 14 converts the time waveform IREF(t) of the reference light L3 to a spectrum and suitably scales it, thereby calculating a reference spectrum IREF($\lambda$).

Although the processing of the arithmetic processing apparatus 14 is not particularly limited, as an example, the arithmetic processing apparatus 14 is capable of calculating a transmittance T($\lambda$) or reflectance R($\lambda$) of a target object OBJ (sample 6) on the basis of the reference spectrum IREF($\lambda$) and the spectrum IOBJ($\lambda$) of the object light L2.

$$T(\lambda) = IOBJ(\lambda)/IREF(\lambda)$$

$$R(\lambda) = IOBJ(\lambda)/IREF(\lambda)$$

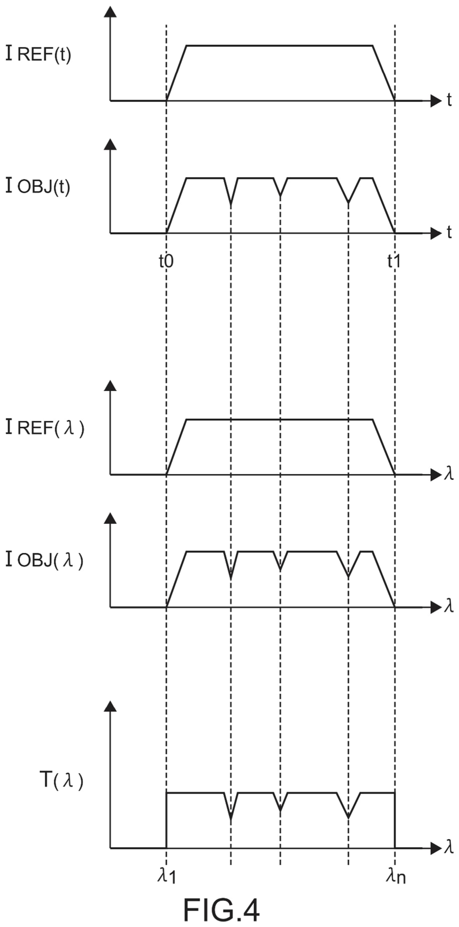

Fig. 4 is a schematic view for describing the spectroscopy of the spectrometer 10 shown in Fig. 2. As described above, time t and wavelength $\lambda$ of the wavelength-swept light L1 correspond one-to-one to each other. Thus, the time waveform IREF(t) of the wavelength-swept light L1 can be converted to the spectrum IREF($\lambda$) in the frequency domain.

Also regarding the time waveform IOBJ(t) of the object light L2, the time t and the wavelength $\lambda$ correspond one-to-one to each other. Therefore, the arithmetic processing apparatus 14 is capable of converting the waveform IOBJ(t) of the object light L2 indicated by the output of the light-receiving apparatus 13 to the spectrum IOBJ($\lambda$) of the object light L2.

The arithmetic processing apparatus 14 is capable of calculating a transmission spectrum T($\lambda$) of the target object OBJ (sample 6) on the basis of the ratio IOBJ($\lambda$)/IREF($\lambda$) of the two spec-trums IOBJ($\lambda$) and IREF($\lambda$).

It is assumed that the relationship of the wavelength $\lambda$ of the wavelength-swept light L1 at the time t is represented by the function of $\lambda = f(t)$. In the simplest way, the wavelength $\lambda$ linearly changes in accordance with a linear function with respect to the time t. When the time waveform IOBJ(t) of the object light L2 lowers at a certain point in time tx, it means that the transmission spectrum T($\lambda$) has an absorption spectrum at a wavelength $\lambda x = f(tx)$.

Note that the processing in the arithmetic processing apparatus 14 is not limited thereto. After the arithmetic operation of the ratio T(t)= IOBJ(t)/IREF(t) of the two time waveforms IOBJ(t) and IREF(t) of time, a variable t of the time waveform T(t) may be converted to $\lambda$, thereby calculating the transmission spectrum T($\lambda$).

[Examination of Stable Output of Wavelength-Swept Light L1]

The inventor of the present invention newly found that the measurement accuracy of the spectrometers 1 and 10 illustrated in Figs. 1 and 2 is significantly affected by the fluctuation of the wavelength-swept light L1 that is the output of the light source apparatuses 2 and 11.

That is, the inventor of the present invention newly found that suppressing the fluctuation of the wavelength-swept light L1 output by the light source apparatuses 2 and 11 in the spectrometers 1 and 10 to stably output the wavelength-swept light L1 enables the measurement accuracy to be enhanced.

The inventor of the present invention then studied to stably output the wavelength-swept light L1 by the light source apparatuses 2 and 11.

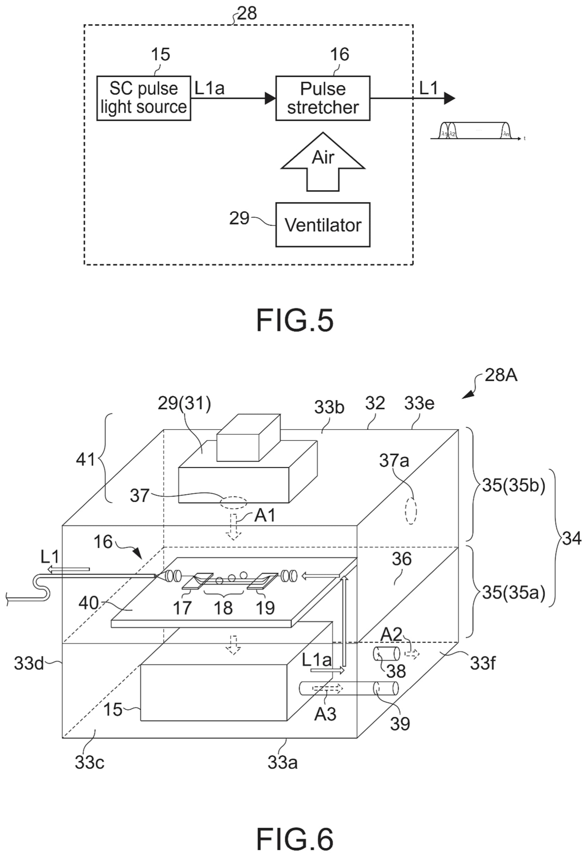

The pulse light source 15 shown in Fig. 2 is typically configured with the components of the pulse light source 15 housed in a single housing (see the pulse light source 15 in Fig. 6). On the other hand, in the pulse stretcher 16, the components (splitter 17, delay line 18, coupler 19, etc.) of the pulse stretcher 16 are typically mounted on a supporting member 40 (see Fig. 6). For example, the supporting member 40 may be an optical surface plate.

Examining the pulse stretcher 16 mounted on the supporting member 40, the inventor of the present invention newly found that misalignment caused by a temperature change has a significant effect on the light intensity and spectrum of the wavelength-swept light L1 and the delay for each wavelength.

The inventor of the present invention then newly found that suppressing the temperature change of the pulse stretcher 16 enables the fluctuation of the properties of the pulse stretcher 16 to be suppressed and enables the fluctuation of the intensity, the amplitude spectrum, the phase spectrum, and the like of the wavelength-swept light L1 to be suppressed. That is, the inventor of the present invention newly found that suppressing the temperature change of the pulse stretcher 16 enables the wavelength-swept light L1 to be stably output.

Hereinafter, details of the light source apparatus according to the present invention, which has been newly devised on the basis of the above-mentioned examination results of the inventor of the present invention will be described.

[Basic Configuration of Light Source Apparatus]

Fig. 5 is a block diagram showing a basic configuration example of a light source apparatus 28 according to an embodiment of the present invention. The light source apparatus 28 is a light source apparatus that generates the wavelength-swept light L1 and includes a ventilator 29 in addition to the pulse light source 15 and the pulse stretcher 16.

As described above, the pulse light source 15 generates the broadband pulsed light L1a that has a broadband continuous spectrum. Moreover, the pulse stretcher 16 is configured to lengthen the broadband pulsed light L1a on the time axis and generate the wavelength-swept light L1.

The ventilator 29 supplies the pulse stretcher 16 with the air. Accordingly, it becomes possible to suppress the temperature change of the pulse stretcher 16 and it becomes possible to stably output the wavelength-swept light L1.

For example, a fan filter unit (FFU) can be used as the ventilator 29. The FFU includes built-in filter and fan and is capable of removing foreign matters, dust, and the like contained in the air and supplies the pulse stretcher 16 with the clean air. As a matter of course, a specific configuration of the ventilator 29 is not limited, and any configuration different from the FFU can be employed.

For example, the air outside the light source apparatus 28 (the air in the environment where the light source apparatus 28 is arranged) may be employed as the air supplied to the pulse stretcher 16 from the ventilator 29. For example, it is assumed that the light source apparatus 28 is arranged in a clean room or the like where the air cleanliness and temperature are controlled. In this case, the pulse stretcher 16 can be supplied with the air whose air cleanliness and temperature have been controlled from the ventilator 29.

As a matter of course, also supplying the pulse stretcher 16 with the air in the environment where the air cleanliness and temperature have been controlled can provide the effect of suppressing the temperature change of the pulse stretcher 16.

Moreover, an air conditioner capable of generating control air whose temperature has been controlled is provided and connected to the ventilator 29. Then, the ventilator 29 can also supply the pulse stretcher 16 with the control air whose temperature has been controlled. Accordingly, it is possible to enhance the effect of suppressing the temperature change of the pulse stretcher 16.

In addition, it is also possible to supply the pulse stretcher 16 with, for example, the air including a predetermined type of gas or the air whose components have been controlled.

[Specific Configuration Examples of Light Source Apparatus]

Light source apparatuses 28A to 28F will be described as specific Configuration Examples 1 to 6 of the light source apparatus 28.

(Configuration Example 1)

Fig. 6 is a perspective view showing the light source apparatus 28A illustrated as Configuration Example 1. In the figure, the broken-lines arrows schematically show the air flow and the solid-line arrows schematically show the optical path.

The light source apparatus 28A includes a pulse light source 15, a pulse stretcher 16, an FFU 31 that functions as the ventilator 29, and a housing portion 32.

As shown in Fig. 6, the outer shape of the housing portion 32 is roughly a rectangular parallelepiped shape. The housing portion 32 includes a lowermost surface 33a and an uppermost surface 33b. The uppermost surface 33b is opposite to the lowermost surface 33a in the height direction of the light source apparatus 28A (upper and lower directions in the figure). Moreover, the housing portion 32 has four side surfaces 33c to 33f.

The lowermost surface 33a is a surface on the lowermost side in the height direction of the light source apparatus 28A. When the light source apparatus 28A is placed, the lowermost surface 33a is a surface the most proximate to the placement surface. The uppermost surface 33b is a surface on the uppermost side in the height direction of the light source apparatus 28A.

The side surface 33c is a surface on the front side in Fig. 6. Hereinafter, it may be referred to as a front surface 33c with the same reference sign. The side surface 33d is a surface on the left side in Fig. 6. Hereinafter, it may be referred to as a left surface 33d with the same reference sign.

The side surface 33e is a surface on the deep side in Fig. 6. Hereinafter, it may be referred to as a deep surface 33e with the same reference sign. The side surface 33f is a surface on the right side in Fig. 6. Hereinafter, it may be referred to as a right surface 33f with the same reference sign.

An inner space 34 is configured inside the lowermost surface 33a, the uppermost surface 33b, and the four side surfaces 33c to 33f of the housing portion 32.

Moreover, in this embodiment, the housing portion 32 is constituted by a member (thermal insulation material) with thermal insulation properties and the inner space 34 of the housing portion 32 is configured as a thermal insulation space.

As shown in Fig. 6, in this embodiment, the inner space 34 of the housing portion 32 has a multi-layer structure constituted by a plurality of layers 35 (35a, 35b). In this embodiment, a partition 36 is configured to be approximately orthogonal to the height direction approximately in the middle of the inner space 34 in the height direction of the light source apparatus 28A. The partition 36 partitions the inner space 34 into a lower layer 35a and an upper layer 35b. Note that the multi-layer structure can also be referred to as a layered structure.

The lower layer 35a corresponds to a lowermost layer of the plurality of layers 35, which is located at the lowest position. The lowermost surface 33a of the housing portion 32 is the bottom surface of the lower layer 35a. The partition 36 constitutes the top surface of the lower layer 35a.

The upper layer 35b corresponds to an uppermost layer of the plurality of layers 35, which is located at the highest position. The partition 36 is the bottom surface of the upper layer 35b. The uppermost surface 33b constitutes the top surface of the upper layer 35b.

Moreover, the housing portion 32 includes an inlet 37 in which the air flows and an outlet from which the air flows out. In this embodiment, the inlet 37 is formed in the uppermost surface 33b of the housing portion 32, i.e., the top surface of the upper layer 35b. An outlet 38 is formed at a position of the right surface 33f where the lower layer 35a is configured. That is, the inlet 37 is configured at a position higher than the outlet 38 in the height direction of the light source apparatus 28A.

Moreover, a through-hole (not shown) is formed in the partition 36 and the lower layer 35a and the upper layer 35b are spatially continuous. As shown in Fig. 6, the inner space 34 is supplied with air A1 through the inlet 37. The supplied air A1 passes through the upper layer 35b and the lower layer 35a and is exhausted to the outside of the light source apparatus 28A through the outlet 38. The air exhausted from the outlet 38 will be referred to as air A2.

The pulse light source 15 is configured with the components of the pulse light source 15 housed in a single housing. The pulse light source 15 is housed in the inner space 34 of the housing portion 32. Specifically, the pulse light source 15 is arranged in the lower layer 35a of the inner space 34.

During the operation of the light source apparatus 28A, the pulse light source 15 is a heat source. In this embodiment, as shown in Fig. 6, an exhaust port 39 for lasers is formed at a position of the right surface 33f where the lower layer 35a is configured. Heated air A3 discharged from the pulse light source 15 is not discharged to the inner space 34 of the housing portion 32, but exhausted to the outside of the light source apparatus 28A through the exhaust port 39 for lasers.

That is, in the light source apparatus 28A, the air A3 exhausted from the pulse light source 15 is exhausted to the outside of the housing portion 32 without passing through the lower layer 35a and the upper layer 35b.

In the pulse stretcher 16, the components (splitter 17, delay line 18, coupler 19, etc.) of the pulse stretcher 16 are mounted on the supporting member 40. For example, the supporting member 40 may be an optical surface plate.

As shown in Fig. 6, the pulse stretcher 16 is housed in the inner space 34 of the housing portion 32. Specifically, the pulse stretcher 16 is arranged in the upper layer 35b of the inner space 34.

The pulse stretcher 16 is arranged on the lower side of the inlet 37 for the air A1, which is formed in the uppermost surface 33b. Conversely, it can also be said that the inlet 37 is formed at a position above the pulse stretcher 16 arranged in the upper layer 35b.

The FFU 31 that functions as the ventilator 29 is configured on the uppermost surface 33b of the housing portion 32. The FFU 31 includes built-in filter and fan. The FFU 31 removes foreign matters, dust, and the like contained in the external air of the light source apparatus 28A and supplies the clean air A1 to the inner space 34 of the housing portion 32 through the inlet 37.

As described above, in the light source apparatus 28A according to this embodiment, the inner space 34 of the housing portion 32 has a multi-layer structure in which the plurality of layers 35 is stacked in the height direction of the light source apparatus 28A. Then, the pulse light source 15 and the pulse stretcher 16 are respectively arranged in different layers 35 of the plurality of layers 35.

Specifically, the pulse stretcher 16 is arranged in the upper layer 35b and the pulse light source 15 is arranged in the lower layer 35a. That is, the pulse light source 15 is arranged in a layer lower than the pulse stretcher 16 in the height direction of the light source apparatus 28A.

The inlet 37 is formed at a position above the pulse stretcher 16 in the uppermost surface 33b. Then, the clean air A1 is supplied to the upper layer 35b where the pulse stretcher 16 is arranged through the inlet 37 by the FFU 31 installed on the uppermost surface 33b.

The clean air A1 flowing in from the inlet 37 is first supplied to the pulse stretcher 16 arranged in the upper layer 35b. Then, the clean air A1 is supplied to the pulse light source 15 arranged in the lower layer 35a via the through-hole (not shown) of the partition 36 and exhausted to the outside of the housing portion 32 through the outlet 38 (air A2).

That is, in the light source apparatus 28A according to this embodiment, the pulse stretcher 16 is arranged upstream of the pulse light source 15 with respect to a flow path of the air A1 flowing in from the inlet 37.

In the light source apparatus 28A according to this embodiment, the pulse light source 15 and the pulse stretcher 16 are housed in the same housing portion 32. Then, the clean air A1 is supplied in the inner space 34 of the housing portion 32 by the FFU 31.

Accordingly, it becomes possible to suppress the temperature change of the pulse stretcher 16 and it becomes possible to suppress the fluctuation of the properties of the pulse stretcher 16. That is, it becomes possible to suppress the fluctuation of the intensity, the amplitude spectrum, the phase spectrum, and the like of the wavelength-swept light L1 and it becomes possible to stably output the wavelength-swept light L1.

Moreover, it becomes also possible to suppress the temperature change of the pulse light source 15 and it becomes also possible to suppress the fluctuation of the output intensity of the pulse light source 15. As a result, it becomes possible to enhance the measurement accuracy of the spectrometer. Moreover, it becomes possible to also enhance the measurement stability.

When the inventor of the present invention examined a prototype, the inventor of the present invention found that the stability of the output of the pulse light source 15 was $\pm 1$ %/°C and the stability of the output of the pulse stretcher 16 was $\pm 2.5$ %/°C. In a case where the splitter 17 of the pulse stretcher 16 is constituted by AWG, the output is reduced when the light collection position from the pulse light source 15 is shifted from the AWG incident position by only $\mu$m orders of magnitude.

Thus, the pulse stretcher 16 is relatively more susceptible to the temperature change, and the configuration in which the pulse stretcher 16 arranged in the upper layer 35b near the inlet 37 and the pulse light source 15 is arranged in the lower layer 35a far from the inlet 37 is very effective.

That is, by arranging the pulse stretcher 16 of the pulse light source 15 and the pulse stretcher 16, which is relatively more susceptible to the temperature change, on the upstream side of the flow path of the clean air A1 flowing in from the inlet 37, the temperature of the pulse stretcher 16 can be preferentially stabilized. Accordingly, total properties of the light source apparatus 28A can be stabilized.

For example, in a case of using a commercial product unitized as the pulse light source 15, the pulse stretcher 16 mounted on the supporting member 40 is often more susceptible to the temperature fluctuation than the pulse light source 15. Thus, the overall performance of the light source apparatus 28A can be enhanced by preferentially stabilizing the temperature of the pulse stretcher 16.

Moreover, as shown in Fig. 6, in the light source apparatus 28A, the air A3 exhausted from the pulse light source 15 is exhausted to the outside of the housing portion 32 without passing through the lower layer 35a where the pulse light source 15 is arranged and the upper layer 35b where the pulse stretcher 16 is arranged.

The pulse light source 15 can be considered as a heat source, and the temperature of the air A3 exhausted from the pulse light source 15 is often higher than the temperature of the inner space 34 of the housing portion 32. Thus, the air A3 exhausted from the pulse light source 15 is directly exhausted to the outside, such that the temperature stability of the inner space 34 can be further increased.

Moreover, as shown in Fig. 6, in the light source apparatus 28A, the pulse light source 15, the pulse stretcher 16, and the FFU 31 can be arranged in the height direction of the light source apparatus 28A, i.e., a vertical direction. Accordingly, it is possible to reduce the foot space of the light source apparatus 28A (space necessary for arranging the light source apparatus 28A).

As a matter of course, using the housing portion 32 to integrally configure the pulse light source 15, the pulse stretcher 16, and the FFU 31 is also advantageous for reducing the foot space of the light source apparatus 28A.

Note that a housing portion capable of arranging the components (pulse light source 15, pulse stretcher 16, FFU 31) of the light source apparatus 28A in the vertical direction, like the housing portion 32 according to this embodiment, can be referred to as a tower-type housing portion.

In the housing portion 32 shown in Fig. 6, the inner space 34 is divided into two layers, the lower layer 35a and the upper layer 35b. Here, the upper space on the uppermost surface 33b can also be considered as a layer and the housing portion 32 can also be considered as a tower-type housing portion with three layers. In this case, an upper-side layer 41 on the uppermost surface 33b can also be referred to as an external uppermost layer or a roof-top layer.

In the present disclosure, the "plurality of layers" according to the present invention means the plurality of layers 35 configured in the inner space 34. That is, in the light source apparatus 28A shown in Fig. 6, the lower layer 35a and the upper layer 35b are an embodiment of the "plurality of layers" according to the present invention.

Then, the upper layer 35b is an embodiment of the "uppermost layer of the plurality of layers, which is located at the highest position" according to the present invention. Moreover, the lower layer 35a is an embodiment of the "lowermost layer of the plurality of layers, which is located at the lowest position." Moreover, the uppermost surface 33b is an embodiment of the "uppermost surface" according to the present invention.

Moreover, as shown in Fig. 6, in the light source apparatus 28A, the inlet 37 is formed in the uppermost surface 33b and is arranged at a high position in the inner space 34 of the housing portion 32. On the other hand, the outlet 38 is arranged at a low position in the inner space 34 of the housing portion 32.

Accordingly, in the inner space 34 of the housing portion 32, it is possible to generate the air flow (down flow) that moves downwards. As a result, it becomes possible to suppress particle deposition on the supporting member 40 of the pulse stretcher 16 and the unit. Moreover, it becomes possible to prevent particles from adhering to the optical components in the optical path of the laser and to prevent optical component degradation (including laser burning) and the resulting reduction in output power.

In this embodiment, since the FFU 31 supplies the air A1 downwards in the height direction of the light source apparatus 28A through the inlet 37, the effects of the down flow can be sufficiently provided. As a matter of course, the inlet 37 may be configured in the side surfaces 33c to 33f of the housing portion 32 as long as it is located at a position higher than the outlet 38.

For example, the inlet 37 only needs to be provided at a position 37a higher than one or those of the components of the pulse light source 15 and the pulse stretcher 16, which is/are located at the highest position among them. In this case, the position 37a only needs to be attached to the FFU 31. Then, the effects of the down flow can also be obtained in a case where the direction in which the FFU 31 makes the air A1 flow in is not downwards, but sideways or diagonally.

(Configuration Example 2)

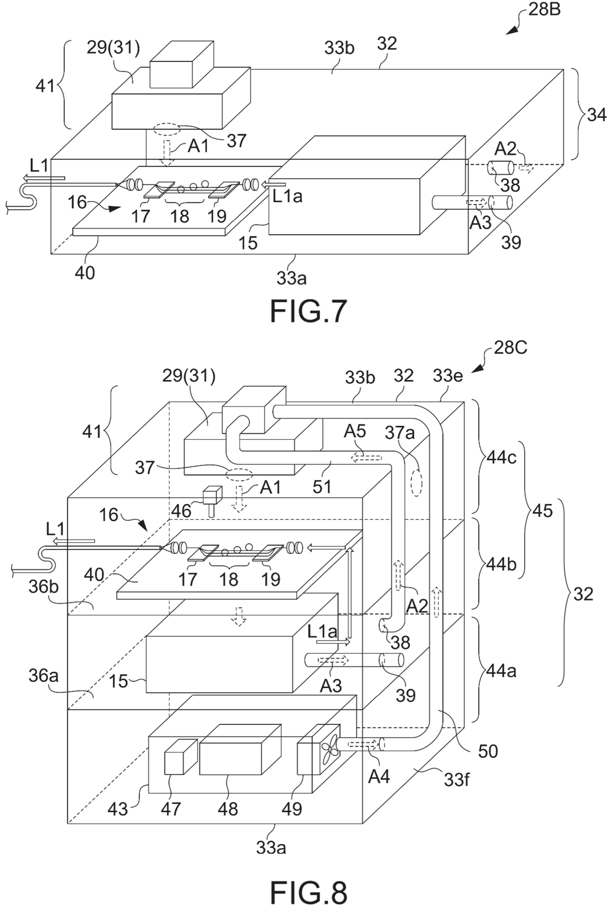

Fig. 7 is a perspective view showing the light source apparatus 28B illustrated as Configuration Example 2. In the light source apparatus 28B shown in Fig. 7, the inner space 34 of the housing portion 32 is not configured as a multi-layer structure. As shown in Fig. 7, the pulse light source 15 and the pulse stretcher 16 are arranged side by side on the lowermost surface 33a of the housing portion 32.

The inlet 37 and the FFU 31 are configured on the uppermost surface 33b of the housing portion 32. The inlet 37 is formed at a position above the pulse stretcher 16. The FFU 31 supplies the clean air A1 to the inner space 34 of the housing portion 32 through the inlet 37. The supplied clean air A1 is exhausted to the outside of the light source apparatus 28B through the outlet 38 formed at a position lower than the inlet 37 (air A2).

Accordingly, it becomes possible to suppress the temperature change of the pulse stretcher 16 and it becomes possible to stably output the wavelength-swept light L1. Moreover, it becomes also possible to suppress the temperature change of the pulse light source 15 and it becomes also possible to suppress the fluctuation of the output intensity of the pulse light source 15. As a result, it becomes possible to enhance the measurement accuracy of the spectrometer.

In the light source apparatus 28B shown in Fig. 7, the pulse light source 15 and the pulse stretcher 16 are arranged in parallel on the lowermost surface 33a. Thus, as compared to the light source apparatus 28A shown in Fig. 6, the foot space increases. On the other hand, as compared to the light source apparatus 28A shown in Fig. 6, the size in the height direction can be reduced.

(Configuration Example 3)

Fig. 8 is a perspective view showing the light source apparatus 28C illustrated as Configuration Example 3. The light source apparatus C shown in Fig. 8 includes an air conditioner 43 in addition to the pulse light source 15, the pulse stretcher 16, and the FFU 31.

As shown in Fig. 8, the inner space 34 of the housing portion 32 according to this embodiment has a multi-layer structure constituted by three layers 44a to 44c. In this embodiment, two partitions 36a and 36b are configured at positions in the inner space 34, which are at approximately equal intervals in the height direction of the light source apparatus 28C.

The space from the lowermost surface 33a to the lower partition 36a is the lowermost layer 44a and corresponds to a lowermost layer of the three layers 44a to 44c, which is located at the lowest position. The space from the lower partition 36a to the upper partition 36b is the middle layer 44b and corresponds to a middle layer of the three layers 44a to 44c, which is located at the middle position. The space from the upper partition 36b to the uppermost surface 33b is the uppermost layer 44c and corresponds to an uppermost layer of the three layers 44a to 44c, which is located at the highest position.

A through-hole (not shown) is formed in the upper partition 36b and the middle layer 44b and the uppermost layer 44c are spatially continuous. The middle layer 44b and the uppermost layer 44c serve as a space (hereinafter, referred to as air conditioning space) 45 where the air is to be conditioned.

As shown in Fig. 8, the pulse light source 15 is arranged in the middle layer 44b. The pulse stretcher 16 is arranged in the uppermost layer 44c. Moreover, the inlet 37 and the FFU 31 are configured in the uppermost surface 33b of the housing portion 32. The outlet 38 is formed at a position of the right surface 33f of the housing portion 32 where the middle layer 44b is configured.

The air conditioner 43 is arranged in the lowermost layer 44a. That is, the air conditioner 43 is arranged in a layer lower than the pulse light source 15 and the pulse stretcher 16 in the height direction of the light source apparatus 28C.

The air conditioner 43 generates control air A4 whose temperature has been controlled. The air conditioner 43 includes a temperature sensor 46, a controller 47, a temperature control apparatus 48, and a fan 49.

The temperature sensor 46 is externally attached to the main body of the air conditioner 43. Specifically, the temperature sensor 46 is provided in the air conditioning space 45 (the uppermost layer 44c and the middle layer 44b) where the pulse stretcher 16 and the pulse light source 15 are installed.

The controller 47 provides feedback control of the temperature control apparatus 48 so that a detected value of the temperature sensor 46 approaches a target temperature. The fan 49 sends the control air A4 whose temperature has been controlled by the temperature control apparatus 48 to the FFU 31 via an air duct 50 for thermal insulation.

The FFU 31 includes built-in filter and fan. The FFU 31 removes foreign matters, dust, and the like contained in the control air A4 and sends the clean air A1 to the air conditioning space 45.

In this embodiment, the air conditioner 43 is installed in a layer different from the layer for the pulse light source 15 and the pulse stretcher 16. More favorably, the air conditioner 43 is favorably arranged in a layer lower than the layer for the pulse light source 15 and the pulse stretcher 16.

This prevents damage to the pulse light source 15 and the pulse stretcher 16 in case of water leakage because the air conditioner 43 has a drainage facility. Moreover, since the air conditioner 43 is heavy and vibrates during operation, it can be favorable to arrange it in a low position in the housing portion 32 in terms of rigidity.

As shown in Fig. 8, the air conditioner 43 is arranged in the lowermost layer 44a that is the lowermost layer and the pulse light source 15 and the pulse stretcher 16 are installed in the air conditioning space 45 including the middle layer 44b and the uppermost layer 44c above it. Moreover, the FFU 31 is installed in the upper-side layer 41 on the uppermost surface 33b of the housing portion 32.

In this embodiment, the air conditioning space 45 is thermally insulated and the size of the air conditioning space 45 is favorably narrowed as compared to the whole of the middle layer 44b and the uppermost layer 44c. Setting the air conditioning space 45 to be small as possible can enhance the temperature stability. Note that the entire inner space 34 of the housing portion 32 may be configured as a thermal insulation space or the air conditioning space 45 of the inner space 34 may be partially configured as a thermal insulation space.

The inlet 37 for the clean air A1 in the air conditioning space 45 is arranged at a position higher than the pulse light source 15 and the pulse stretcher 16. In this embodiment, the FFU 31 is arranged in the upper-side layer 41 on the uppermost surface 33b and the inlet 37 is arranged in the uppermost surface 33b of the air conditioning space 45.

Note that the inlet 37 for the clean air A1 may be the side surface of the air conditioning space 45. In this case, it is sufficient to provide the inlet 37 at the position 37a higher than the one or those of the components of the pulse light source 15 and the pulse stretcher 16, which is/are located at the highest position among them. In this case, the position 37a only needs to be attached to the FFU 31.

The air conditioning space 45 is provided with the outlet 38 at a position lower than the inlet 37. The air A2 exhausted from the outlet 38 is returned to the FFU 31 as return air A5 via an air duct 51 for thermal insulation. The FFU 31 mixes the control air A4 from the air conditioner 43 and the return air A5 exhausted from the outlet 38 and supplies it to the air conditioning space 45.

The airflow of the FFU 31 may be determined in accordance with the size of the air conditioning space 45 so that the air is distributed to all corners of the air conditioning space 45. On the other hand, the airflow of the air conditioner 43 may be smaller than the airflow of the FFU 31. That is, the airflow of the FFU 31 can be set to be larger than the airflow of the air conditioner 43. It is because the airflow difference is covered by the air A2 (return air A5) discharged from the outlet 38.

The pulse light source 15 is a heat source. The hot air A3 discharged from the pulse light source 15 is not discharged to the air conditioning space 45, but exhausted to the outside of the housing portion 32 from the exhaust port 39 for lasers. That is, the air A3 is not returned to the FFU 31.

The temperature sensor 46 is provided in vicinity of the inlet 37 for the clean air A1. It can be said that the temperature of the air circulated through the light source apparatus 28C is the most stable in vicinity of the inlet 37 (that is, at the upstream of the flow of the air) and deviates from a desired value as the air is closer to the outlet 38.

That is, it can be said that comparing the middle layer 44b with the uppermost layer 44c, the temperature is more stable in the uppermost layer 44c. In view of this, it is favorable to arrange one of the pulse light source 15 and the pulse stretcher 16, which is relatively more susceptible to the temperature change, in the layer (the uppermost layer 44c) close to the inlet 37 and arrange the other which is relatively insusceptible to the temperature change, in the layer (the middle layer 44b) close to the outlet 38.

As described above, when the inventor of the present invention examined a prototype, the stability of the output of the pulse light source 15 was ±1 %/°C and the stability of the output of the pulse stretcher 16 was ±2.5 %/°C. In a case where the splitter 17 of the pulse stretcher 16 is constituted by AWG, the output is reduced when the light collection position from the light source is shifted from the AWG incident position by only μm orders of magnitude.

Therefore, the pulse stretcher 16 is relatively more susceptible to the temperature change, and the pulse stretcher 16 is arranged in the uppermost layer 44c close to the inlet 37 and the pulse light source 15 is arranged in the middle layer 44b far from the inlet 37.

Focusing on the temperature sensor 46, it can be said that the temperature sensor 46 is arranged in vicinity of one of the pulse light source 15 and the pulse stretcher 16, which is relatively more susceptible to the temperature change. In this embodiment, the temperature sensor 46 is arranged at a position closer to the pulse stretcher 16 than the pulse light source 15.

In the light source apparatus 28C according to this embodiment, the pulse light source 15 and the pulse stretcher 16 are housed in the same housing portion 32 and the temperature of the air conditioning space 45 in the housing portion 32 is managed and controlled by the air conditioner 43.

Accordingly, the fluctuation of the output intensity of the pulse light source 15 can be suppressed and the fluctuation of the properties of the pulse stretcher 16 can be suppressed. Accordingly, the fluctuations of the wavelength-swept light intensity, the amplitude spectrum, the phase spectrum, and the like can be suppressed. Moreover, arranging the air conditioner 43, the pulse light source 15, and the pulse stretcher 16 in the vertical direction can reduce the foot space of the light source apparatus 28C.

Moreover, the temperature of the pulse stretcher 16 can be preferentially stabilized by arranging the pulse stretcher 16 of the pulse light source 15 and the pulse stretcher 16, which is relatively more susceptible to the temperature change, at the position close to the inlet 37. Accordingly, total properties of the light source apparatus 28C can be stabilized.

For example, in a case of using a commercial product unitized as the pulse light source 15, the pulse stretcher 16 mounted on the supporting member 40 is often more susceptible to the temperature fluctuation than the pulse light source 15. Thus, the overall performance of the light source apparatus 28C can be enhanced by arranging the temperature sensor 46 at the position close to the pulse stretcher 16 to preferentially stabilize the temperature of the pulse stretcher 16.

The control air approaches the target temperature as the control air moves upstream. The control air deviates from the target temperature as the control air moves downstream. Therefore, the temperature of the pulse stretcher 16 can be preferentially stabilized by arranging the pulse stretcher 16 on the upstream side where the temperature is closer to the desired value.

In addition, it becomes possible to generate a downward air flow (down flow) inside the housing portion 32 by arranging the inlet 37 in the high position in the air conditioning space 45 and arranging the outlet 38 in the low position in the air conditioning space 45.

Accordingly, it becomes possible to suppress particle deposition on the supporting member 40 of the pulse stretcher 16 and the unit. Moreover, it becomes possible to prevent particles from adhering to the optical components in the optical path of the laser and to prevent optical component degradation (including laser burning) and the resulting reduction in output power.

As the air conditioning space 45 increases, it becomes more difficult to control the temperature to all corners, which may deteriorate the uniformity of the temperature in the space or generate areas where the temperature is less stable. Therefore, it is necessary to supply the air to the air conditioning space 45 at the airflow according to the size of the air conditioning space 45.

Here, to cover the air to be supplied to the air conditioning space 45 only by the air conditioner 43, the air conditioner 43 needs to have a larger size. With the light source apparatus 28C according to this embodiment, the air A2 (return air A5) exhausted from the air conditioning space 45 can be returned to the FFU 31 that is the ventilator 29 and mixed with the control air A4 to be supplied to the air conditioning space 45. Accordingly, it becomes possible to control the temperature of the air conditioning space 45 to all corners without increasing the size of the air conditioner 43, and the uniformity and stability of the temperature in the air conditioning space 45 can be enhanced.

The pulse light source 15 can be thought as a heat source, and the temperature of the air A3 exhausted from the pulse light source 15 is higher than the temperature inside the air conditioning space 45. Therefore, the temperature stability in the air conditioning space 45 can be further enhanced by directly exhausting the air A3 exhausted from the pulse light source 15 to the outside.

(Configuration Example 4)

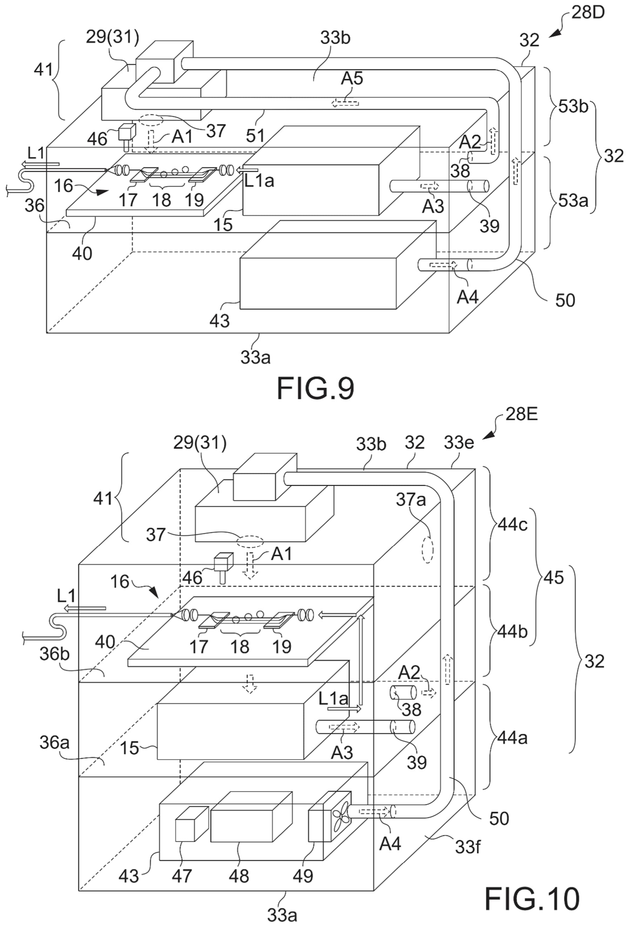

Fig. 9 is a perspective view showing the light source apparatus 28D illustrated as Configuration Example 4. In the light source apparatus 28D shown in Fig. 9, the inner space 34 of the housing portion 32 is configured as a multi-layer structure by the partition 36 and is divided into a lower layer 53a and an upper layer 53b.

As shown in Fig. 9, the air conditioner 43 is arranged in the lower layer 53a. The upper layer 53b is configured as an air conditioning space and the pulse light source 15 and the pulse stretcher 16 are arranged in parallel.

The inlet 37 and the FFU 31 are configured on the uppermost surface 33b of the housing portion 32. The inlet 37 is formed at a position above the pulse stretcher 16.

The air conditioner 43 sends the control air A4 whose temperature has been controlled to the FFU 31 via the air duct 50 for thermal insulation. Moreover, the air A2 exhausted from the outlet 38 is returned to the FFU 31 as the return air A5 via the air duct 51 for thermal insulation.

The FFU 31 mixes the control air A4 from the air conditioner 43 and the air A5 exhausted from the outlet 38 and supplies it to the upper layer 53b.

As shown in Fig. 9, in the upper layer 53b, the pulse stretcher 16 relatively more susceptible to the temperature change is arranged at the position close to the inlet 37 and the pulse light source 15 insusceptible to the temperature change is arranged at the position close to the outlet 38.

Also in the light source apparatus 28D, it becomes possible to suppress the temperature change of the pulse stretcher 16 and it becomes possible to stably output the wavelength-swept light L1. Moreover, it becomes also possible to suppress the temperature change of the pulse light source 15 and it becomes also possible to suppress the fluctuation of the output intensity of the pulse light source 15. As a result, it becomes possible to enhance the measurement accuracy of the spectrometer.

In the light source apparatus 28D shown in Fig. 9, the foot space increases as compared to the light source apparatus 28C shown in Fig. 8 while the size in the height direction can be reduced.

(Configuration Example 5)

Fig. 10 is a perspective view showing the light source apparatus 28E illustrated as Configuration Example 5.

In the light source apparatus 28C shown in Fig. 8, the air A3 exhausted from the air conditioning space 45 is returned to the FFU 31, mixed with the control air A4, and supplied to the air conditioning space 45.

In this regard, in the light source apparatus 28E shown in Fig. 10, the air duct 51 is omitted and the air inside the air conditioning space 45 is exhausted to the outside through the outlet 38. For example, in a case where the volume of the air conditioning space 45 is not so large, a configuration to supply only the control air A4 generated by the air conditioner 43 from the FFU 31 to the air conditioning space 45 can be employed.

Also in the light source apparatus 28E, it becomes possible to suppress the temperature change of the pulse stretcher 16 and it becomes possible to stably output the wavelength-swept light L1. Moreover, it becomes also possible to suppress the temperature change of the pulse light source 15 and it becomes also possible to suppress the fluctuation of the output intensity of the pulse light source 15. As a result, it becomes possible to enhance the measurement accuracy of the spectrometer.

(Configuration Example 6)

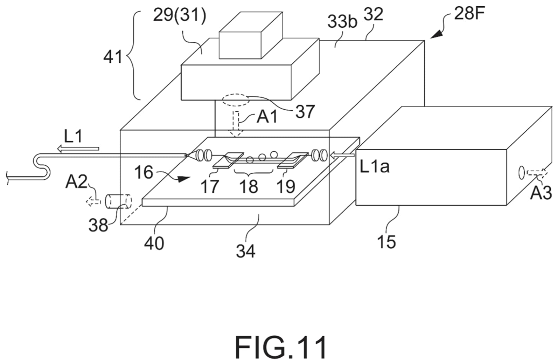

Fig. 11 is a perspective view showing the light source apparatus 28F illustrated as Configuration Example 6.

In the examples shown in Figs. 6 and 7, the pulse light source 15 and the pulse stretcher 16 are housed in the inner space 34 of the housing portion 32. Moreover, in the examples shown in Figs. 8 to 10, the pulse light source 15, the pulse stretcher 16, and the air conditioner 43 are housed in the inner space 34 of the housing portion 32.

In this regard, in the light source apparatus 28F shown in Fig. 11, only the pulse stretcher 16 is housed in the inner space 34 of the housing portion 32.

The inlet 37 and the FFU 31 are configured on the uppermost surface 33b of the housing portion 32. The inlet 37 is formed at a position above the pulse stretcher 16. The FFU 31 supplies the clean air A1 to the inner space 34 of the housing portion 32 through the inlet 37. The supplied clean air A1 is exhausted to the outside of the light source apparatus 28F through the outlet 38 formed at a position lower than the inlet 37 (air A2).

Also in the light source apparatus 28F as shown in Fig. 11, it becomes possible to suppress the temperature change of the pulse stretcher 16 and it becomes possible to stably output the wavelength-swept light L1. As a result, it becomes possible to enhance the measurement accuracy of the spectrometer.

Note that for example, the air outside the light source apparatus 28F (the air of the environment where the light source apparatus 28F is arranged) may be employed as the air to be supplied to the pulse stretcher 16 by the FFU 31. Alternatively, the air conditioner may be provided and connected to the FFU 31 to supply the control air whose temperature has been controlled to the pulse stretcher 16. Accordingly, it is possible to enhance the effect of suppressing the temperature change of the pulse stretcher 16.

Hereinabove, in the light source apparatuses 28A to 28F according to this embodiment, the air is supplied to the pulse stretcher 16 by the FFU 31 that functions as the ventilator 29. Accordingly, it becomes possible to suppress the temperature change of the pulse stretcher 16 and it becomes possible to stably output the wavelength-swept light L1. Moreover, in the light source apparatuses 28A to 28F, it becomes possible to provide the above-mentioned various effects.

<Other Embodiments>

The present invention is not limited to the embodiments described above, and various other embodiments can be made.

In the above description, the configuration in which the pulse stretcher 16 is arranged at the position higher than the pulse light source 15 in the height direction of the light source apparatuses 28A to 28F and the configuration in which the pulse stretcher 16 is arranged in parallel with the pulse light source 15 at the same height have been taken as examples. Moreover, the configuration in which the pulse stretcher 16 is arranged upstream of the pulse light source 15 with respect to the flow path of the air A1 flowing in from the inlet 37 has been taken as an example.

Not limited to such a configuration, a configuration in which the pulse light source 15 is arranged at a position higher than the pulse stretcher 16 or a configuration in which the pulse light source 15 is arranged upstream of the pulse stretcher 16 with respect to the flow path of the air A1 flowing in from the inlet 37 may be employed as long as the air A1 supplied by the ventilator 29 (FFU 31) can reach the pulse stretcher 16.

For example, in the example shown in Fig. 6, the pulse stretcher 16 may be arranged in the lower layer 35a and the pulse light source 15 may be arranged in the upper layer 53b. Moreover, in the examples shown in Figs. 8 and 10, the pulse stretcher 16 may be arranged in the middle layer 44b and the pulse light source 15 may be arranged in the uppermost layer 44c. Then, the ventilator 29 (FFU 31) may supply the air A1 to the layer where the pulse light source 15 is arranged.

As long as the air A1 can reach the pulse stretcher 16, it becomes possible to suppress the temperature change of the pulse stretcher 16 and it becomes possible to stably output the wavelength-swept light L1. As a result, it becomes possible to enhance the measurement accuracy of the spectrometer.

Moreover, depending on the configurations of the pulse light source 15 and the pulse stretcher 16, the pulse light source 15 can be more susceptible to the temperature change than the pulse stretcher 16. In this case, it is effective to arrange the pulse light source 15 at the position close to the inlet 37 (or in the close layer) and arrange the pulse stretcher 16 at the position close to the outlet 38 (or in the close layer).

Moreover, the air conditioner 43 may be arranged at a position higher than the pulse light source 15 or the pulse stretcher 16.

In the examples shown in Figs. 6, 8, and 10, each of the pulse light source 15 and the pulse stretcher 16 is arranged in a different layer of the plurality of layers in the tower-type housing portion 32. On the other hand, in the example shown in Fig. 9, the pulse light source 15 and the pulse stretcher 16 are arranged in the same layer in the tower-type housing portion 32. Thus, the arrangement configuration of the pulse light source 15 and the pulse stretcher 16 with respect to the plurality of layers is not limited, and any configuration in which the pulse light source 15 and the pulse stretcher 16 are arranged in any one of the plurality of layers can be employed.

In the above description, the structure in which the plurality of layers is stacked in the height direction of the light source apparatus has been taken as an example of the multi-layer structure of the inner space 34 of the housing portion 32. Although the height direction of the light source apparatus can be, for example, the vertical direction, not limited thereto.

Moreover, the direction in which the plurality of layers is stacked is not limited to the height direction of the light source apparatus. For example, the multi-layer structure in which the plurality of layers is stacked in a horizontal or diagonal direction may be employed. For example, the inner space 34 of the housing portion 32 is divided into the plurality of layers by one or more partitions extending in a direction orthogonal to the placement surface on which the light source apparatus is placed. Then, the pulse light source, the pulse stretcher, the air conditioner, or the like may be arranged in each layer.

In the tower-type housing portions 32 illustrated in Fig. 6 and Figs. 8 to 10, the layer at the lowest position can also be referred to as a first layer and the layers above the first layer can also be referred to as a second layer, a third layer, and so one in that order. At this time, the layers including the upper-side layer 41 on the uppermost surface 33 may be numbered. For example, in the light source apparatus 28C shown in Fig. 8, the lowermost layer 44a can also be referred to as a first layer, the middle layer 44b can also be referred to as a second layer, the uppermost layer 44c can also be referred to as a third layer, and the upper-side layer 41 on the uppermost surface 33 can also be referred to as a fourth layer.

The embodiments according to the present disclosure have been described with the specific terms, though this description is merely exemplary to aid understanding and does not limit the present disclosure or the scope of claims. The scope of the present invention is defined by the scope of claims. Therefore, embodiments, examples, and modified examples not described herein are also included in the scope of the present invention.

The above-mentioned embodiments are exemplary, not limiting the disclosure. All features described in the embodiments and combinations thereof are not necessarily essential to the disclosure. Moreover, the dimensions (thickness, length, width, etc.) of each member described in the drawings may be scaled up or down as appropriate for the sake of easy understanding. Furthermore, the dimensions of a plurality of members do not necessarily represent their size relationship, and even if one member A is drawn thicker than another member B in the drawing, the member A may be thinner than the member B.

The configurations of the spectrometer, the light source apparatus, the pulse light source, the pulse stretcher, the air conditioner, the ventilator (FFU), and the like, the measurement method for the sample, the generation method for the wavelength-swept light, and the like, described with reference to each drawing are merely embodiments, and any variants can be made without departing from the gist of the present invention. That is, any other configuration, processing flow, algorithm, and the like for carrying out the present invention may be employed.

In the present disclosure, for the sake of easy understanding of the description, the wordings, such as "approximately" and "almost," are used as appropriate. On the other hand, clear differences between a case where the wordings, such as "approximately," are used and a case where they are not used are not defined. That is, in the present disclosure, concepts that define the shape, the size, the position relationship, the state, and the like, such as "the center," "the middle," " equal," "the same," "orthogonal," and " parallel," are assumed to be concepts including "substantially the center," "substantially the middle," "substantially equal," "substantially the same," "substantially orthogonal," "substantially parallel," and the like.

In the present disclosure, expressions using the term "than" such as "greater than A" and "less than A" are expressions that comprehensively include concepts that include the case of being equal to A and concepts that do not include the case of being equal to A. For example, "greater than A" is not limited to the case where it does not include "equal to A"; however, it also includes "equal to or greater than A". Further, "less than A" is not limited to "less than A"; it also includes "equal to or less than A". Upon the implementation of the present invention, specific settings and other settings may be suitably adopted from the concepts that are included in "greater than A" and "less than A" to achieve the effects described above.

Among the characteristic portions according to the present technology described above, at least two of the characteristic portions can also be combined. In other words, the various characteristic portions described in each embodiment may be optionally combined regardless of the embodiments. Further, the various effects described above are merely illustrative and not restrictive, and other effects may be exerted.

Reference Signs List

| | |
|---|---|
| A1 | clean air flowing in from inlet |
| A2 | air flowing out from outlet |
| A3 | air discharged from pulse light source |
| A4 | control air |
| A5 | return air |
| L1 | wavelength-swept light |
| L1a | broadband pulsed light |
| L2 | object light |
| L3 | reference light |
| 1, 10 | spectrometer |
| 2, 11, 28 (28A to 28F) | light source apparatus |
| 15 | pulse light source |
| 16 | pulse stretcher |
| 17 | splitter |
| 18 | delay line |
| 19 | coupler |
| 29 | ventilator |
| 31 | FFU |
| 32 | housing portion |
| 33a | lowermost surface |
| 33b | uppermost surface |
| 33c to 33f | side surface |
| 33a | lowermost surface |
| 35 | layer |
| 35a, 53a | lower layer |
| 35b, 53b | upper layer |
| 37 | inlet |
| 38 | outlet |
| 43 | air conditioner |
| 44a | lowermost layer |
| 44b | middle layer |
| 44c | uppermost layer |
| 44b | middle layer |

**Claims**

1. A light source apparatus that generates wavelength-swept light, comprising:

  a pulse light source that generates pulsed light including a continuous spectrum;
  a pulse stretcher configured to lengthen the pulsed light on a time axis and generate the wavelength-swept light; and

a ventilator that supplies air to the pulse stretcher.

2. The light source apparatus according to claim 1, further comprising

a housing portion that includes an inlet for allowing the air to flow in and an outlet for allowing the air to flow out and houses the pulse stretcher in an inner space, wherein
the ventilator supplies the air to the inner space through the inlet.

3. The light source apparatus according to claim 2, wherein
the housing portion houses the pulse light source in the inner space.

4. The light source apparatus according to claim 3, wherein
the pulse stretcher is arranged upstream of the pulse light source with respect to a flow path of the air flowing in from the inlet.

5. The light source apparatus according to claim 3, wherein

the inner space of the housing portion has a multi-layer structure constituted by a plurality of layers,
each of the pulse light source and the pulse stretcher is arranged in any one of the plurality of layers, and
the ventilator supplies the air to the layer where the pulse stretcher is arranged.

6. The light source apparatus according to claim 5, wherein
each of the pulse light source and the pulse stretcher is arranged in a different layer of the plurality of layers.

7. The light source apparatus according to claim 6, wherein

the layer where the pulse light source is arranged and the layer where the pulse stretcher is arranged are spatially continuous in the plurality of layers, and
the ventilator supplies the air to the layer where the pulse stretcher is arranged or the layer where the pulse light source is arranged.

8. The light source apparatus according to claim 5, wherein
the multi-layer structure is a structure in which the plurality of layers is stacked in a height direction of the light source apparatus.

9. The light source apparatus according to claim 2, wherein
the inlet is configured to be a position higher than the outlet in the height direction of the light source apparatus.

10. The light source apparatus according to claim 2, wherein

the housing portion includes an uppermost surface that constitutes a top surface of an uppermost layer of the plurality of layers, the uppermost layer being located at a highest position,
the inlet is configured in the uppermost surface, and
the ventilator supplies the air downwards in the height direction through the inlet.

11. The light source apparatus according to claim 10, wherein
the ventilator is configured in the uppermost surface.

12. The light source apparatus according to claim 10, wherein

the pulse stretcher is arranged in the uppermost layer,
the pulse light source is arranged in a layer directly below the uppermost layer, and
the uppermost layer and the layer directly below the uppermost layer are spatially continuous.

13. The light source apparatus according to claim 2, further comprising

an air conditioner that generates control air whose temperature is controlled, wherein
the ventilator supplies the control air to the pulse stretcher.

**14.** The light source apparatus according to claim 13, wherein

the inner space of the housing portion has a multi-layer structure constituted by a plurality of layers, and each of the pulse light source, the pulse stretcher, and the air conditioner is arranged in a different layer of the plurality of layers.

**15.** The light source apparatus according to claim 14, wherein

the multi-layer structure is a structure in which the plurality of layers is stacked in a height direction of the light source apparatus, and the air conditioner is arranged in a layer lower than the pulse light source and the pulse stretcher in the height direction of the light source apparatus.

**16.** The light source apparatus according to claim 13, wherein the air conditioner includes a temperature sensor provided in vicinity of the inlet.

**17.** The light source apparatus according to claim 16, wherein the temperature sensor is arranged at a position closer to the pulse stretcher than to the pulse light source.

**18.** The light source apparatus according to claim 2, wherein the inner space of the housing portion is configured as a thermal insulation space.

**19.** The light source apparatus according to claim 13, wherein the ventilator supplies mixed air of the air flowing out from the outlet and the control air to the pulse stretcher.

**20.** The light source apparatus according to claim 19, wherein the ventilator has an airflow larger than an airflow of the air conditioner.

**21.** The light source apparatus according to claim 5, wherein air exhausted from the pulse light source is exhausted to outside of the housing portion without passing through the layer where the pulse stretcher is arranged.

**22.** The light source apparatus according to claim 1, wherein the ventilator is a fan filter unit.

**23.** The light source apparatus according to claim 1, wherein the pulse stretcher includes

arrayed waveguide gratings that spatially split the pulsed light emitted from the pulse light source into a plurality of beams in accordance with wavelengths, and a plurality of fibers that corresponds to the plurality of beams and has different optical path lengths.

Light source apparatus 2

L1

Irradiation optical system 5

3

1

λ1 λ2 .... λn    t

L1

6

L2

L3

7

8

S1

S2

Arithmetic processing apparatus 4

FIG.1

18

FIG.2

EP 4 741 782 A1

Intensity waveform over time of wavelength-swept light

$I$ WS(t)

$\lambda_1$ $\lambda_2$ .... $\lambda_n$

Wavelength waveform over time of wavelength-swept light

$\lambda_1$
$\lambda_n$

t1          t2

FIG.3

FIG.4

28

15                                    16

| SC pulse      | L1a →  | Pulse       | L1 →
| light source  |        | stretcher   |

↑
Air

29 — Ventilator

## FIG.5

28A

29(31)        33b    32    33e

41

37a

37                          35(35b)

A1

16                          34

L1                    36

35(35a)

40        17  18  19

A2

33d                         38        33f

L1a

15        A3        39

33c           33a

## FIG.6

FIG.7

FIG.8

FIG.9

FIG.10

FIG.11

## INTERNATIONAL SEARCH REPORT

| | International application No. |
|---|---|
| | **PCT/JP2024/023894** |

**A. CLASSIFICATION OF SUBJECT MATTER**

*G01J 3/10*(2006.01)i; *G01J 1/08*(2006.01)i; *G01J 11/00*(2006.01)i; *G01N 21/01*(2006.01)i; *G02B 6/30*(2006.01)i; *H01S 3/00*(2006.01)i; *H01S 3/04*(2006.01)i; *H01S 3/10*(2006.01)i

FI:   G01J3/10; G01J1/08; G01J11/00; G01N21/01 D; G02B6/30; H01S3/00 F; H01S3/04; H01S3/10 Z

According to International Patent Classification (IPC) or to both national classification and IPC

**B. FIELDS SEARCHED**

Minimum documentation searched (classification system followed by classification symbols)

G01J 3/00-3/51; G01J 1/00-1/08; G01J 1/42-1/46; G01J 11/00; G01N 21/00-21/01; G01N 21/17-21/61, G02B 6/12; G02B 6/30; G05D 25/00-25/02; G12B 17/00; G12B 17/06; H01S 3/00-3/02; H01S 3/04; H01S 3/10; H01S 5/02; H01S 5/068-5/0687; F21V 29/503; F21V 29/60; H05K 7/20

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)


**C. DOCUMENTS CONSIDERED TO BE RELEVANT**

| Category* | Citation of document, with indication, where appropriate, of the relevant passages | Relevant to claim No. |
|---|---|---|
| X | WO 2018/225799 A1 (USHIO DENKI KABUSHIKI KAISHA) 13 December 2018 (2018-12-13) paragraphs [0014]-[0022], [0049]-[0050], fig. 1-3 | 1 |
| Y | | 2-23 |
| Y | JP 2016-157906 A (FANUC CORPORATION) 01 September 2016 (2016-09-01) paragraphs [0026]-[0027], [0040]-[0044], fig. 1, 5-9 | 2-21 |
| Y | JP 10-125981 A (CYMER INC.) 15 May 1998 (1998-05-15) paragraphs [0022]-[0024], fig. 1 | 5-17, 19-21 |
| Y | JP 2020-129645 A (NEC CORPORATION) 27 August 2020 (2020-08-27) paragraph [0010], fig. 1 | 16-17 |

☑ Further documents are listed in the continuation of Box C.    ☑ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **31 August 2024** | **17 September 2024** |

| Name and mailing address of the ISA/JP | Authorized officer |
|---|---|
| **Japan Patent Office (ISA/JP)** 3-4-3 Kasumigaseki, Chiyoda-ku, Tokyo 100-8915 Japan | |
| | Telephone No. |

Form PCT/ISA/210 (second sheet) (July 2022)

## INTERNATIONAL SEARCH REPORT

International application No.

**PCT/JP2024/023894**

### C.    DOCUMENTS CONSIDERED TO BE RELEVANT

| Category* | Citation of document, with indication, where appropriate, of the relevant passages | Relevant to claim No. |
|---|---|---|
| Y | JP 10-022549 A (NIKON CORPORATION) 23 January 1998 (1998-01-23)<br>paragraph [0014], fig. 1 | 21 |
| Y | Microfilm of the specification and drawings annexed to the request of Japanese Utility Model Application No. 152360/1983 (Laid-open No. 061789/1985) (MITSUBISHI ELECTRIC CORP.) 30 April 1985 (1985-04-30), description, page 3, line 11 - page 4, line 9, fig. 1 | 22 |
| Y | JP 2020-159973 A (USHIO DENKI KABUSHIKI KAISHA) 01 October 2020 (2020-10-01)<br>paragraphs [0021]-[0031], fig. 1-2, 4 | 23 |
| A | WO 2019/229823 A1 (GIGAPHOTON INC.) 05 December 2019 (2019-12-05)<br>entire text, fig. 1-15 | 1-23 |

Form PCT/ISA/210 (second sheet) (July 2022)

**INTERNATIONAL SEARCH REPORT**
**Information on patent family members**

| Patent document cited in search report | | | Publication date (day/month/year) | Patent family member(s) | | | Publication date (day/month/year) |
|---|---|---|---|---|---|---|---|
| WO | 2018/225799 | A1 | 13 December 2018 | JP | 2020-115125 | A | |
| | | | | US | 2020/0166406 | A1 | |
| | | | | paragraphs [0058]-[0069], [0104]-[0105], fig. 1-3 | | | |
| | | | | EP | 3637069 | A1 | |
| JP | 2016-157906 | A | 01 September 2016 | US | 2016/0254642 | A1 | |
| | | | | paragraphs [0035]-[0036], [0049]-[0054], fig. 1, 5-9 | | | |
| JP | 10-125981 | A | 15 May 1998 | US | 5748656 | A | |
| | | | | column 6, line 3 - column 7, line 8, fig. 1 | | | |
| | | | | EP | 0783193 | A1 | |
| JP | 2020-129645 | A | 27 August 2020 | (Family: none) | | | |
| JP | 10-022549 | A | 23 January 1998 | (Family: none) | | | |
| JP | 60-061789 | U1 | 30 April 1985 | (Family: none) | | | |
| JP | 2020-159973 | A | 01 October 2020 | WO | 2020/196689 | A1 | |
| | | | | US | 2022/0170791 | A1 | |
| | | | | paragraphs [0056]-[0071], fig. 1-2, 4 | | | |
| | | | | EP | 3951335 | A1 | |
| WO | 2019/229823 | A1 | 05 December 2019 | US | 2021/0016390 | A1 | |

Form PCT/ISA/210 (patent family annex) (July 2022)

**EP 4 741 782 A1**

**Patent documents cited in the description**

- JP 2020159971 A
- JP 2020159973 A